# FASCICULE DE BREVET EUROPEEN

(11) **EP 3 540 153 B1**
(45) Date de publication et mention de la délivrance du brevet: **05.08.2020**
(21) Numéro de dépôt: 18315054.9
(22) Date de dépôt: 27.12.2018
(51) Int. Cl.: E04H 17/16, B29C 48/07, B29C 48/19

(54) **ELÉMENT D'OCCULTATION DE CLÔTURE**
SICHTSCHUTZELEMENT FÜR ZÄUNE
VIEW BARRIER FOR FENCES

(30) Priorité: 15.03.2018 FR 1870287
(43) Date de publication de la demande: 18.09.2019
(73) Titulaire: Morel S.A., 39005 Lons Le Saunier Cedex (FR)
(72) Inventeur: Morel, Christian, F-39570 Pannessieres (FR)
(74) Mandataire: Cabinet Bleger-Rhein-Poupon

(56) Documents cités:
- EP-A1- 2 924 193
- EP-A1- 3 249 139
- FR-A1- 3 032 217
- FR-A1- 3 033 351

## Description

La présente invention concerne un élément d'occultation pouvant s'installer sur des grilles ou grillages d'une clôture, ainsi qu'un procédé de fabrication d'un tel élément d'occultation.

L'invention a également trait à un procédé de réalisation d'une clôture occultante comportant au moins un tel élément d'occultation, et une clôture occultante comportant au moins un tel élément d'occultation.

Il est connu de réaliser une clôture ou séparateur comportant une paroi notamment verticale de type grille ou grillage disposée entre deux poteaux verticaux. Il est bien entendu que la paroi et les poteaux le soutenant peuvent ne pas être verticaux, mais présenter un angle de quelques degrés par rapport à un plan vertical.

Cette paroi notamment verticale est constituée d'une part de fils ou tiges principaux espacés régulièrement. Ces fils ou tiges principaux sont sensiblement rigides et sont parallèles entre eux.

Cette paroi notamment verticale est constituée d'autre part de fils ou tiges secondaires. Les fils ou tiges principaux sont maintenus solidairement parallèles et régulièrement espacés au moyen de ces fils ou tiges secondaires. Ces fils ou tiges secondaires sont sensiblement rigides, ils sont espacés régulièrement ou non, et ils sont parallèles entre eux. Les fils ou tiges secondaires sont placés perpendiculairement par rapport aux fils ou tiges principaux, ils sont soudés ponctuellement aux fils ou tiges principaux à leur intersection ou maintenus par des moyens de liaison tel que par exemple des agrafes.

Les fils ou tiges principaux de la paroi verticale présentent de manière connue une portion au moins à chacune de leurs extrémités haute et basse qui constitue un pli. Ce pli forme, avec des plis d'autres fils ou tiges principaux, une avancée perpendiculaire à ces fils ou tiges principaux. Ces avancées et ces plis au moins haut et bas font saillie par rapport au plan formé par ladite paroi notamment verticale. Ces avancées et ces plis sont destinés à rigidifier la paroi notamment verticale et d'empêcher ainsi que la grille ou grillage de la paroi soit aisément soulevé.

La clôture peut comporter également d'autres avancées, notamment disposées au milieu de la grille ou grillage. Les avancées sont parallèles entre elles.

Il est connu également, suivant un mode de réalisation alternatif, que chaque avancée supporte des fils ou tiges tertiaires, parallèles entre eux et parallèles aux fils ou tiges secondaires.

Ici aussi, ces fils ou tiges tertiaires sont soudés ponctuellement aux fils ou tiges principaux au niveau des avancées ou maintenus dessus par des moyens de liaison tel que par exemple des agrafes.

Cette clôture comporte également des cages dans un sens des fils ou tiges principaux. Ces cages sont de section transversale rectangulaire, et elles sont définies d'un côté par la paroi verticale constituée par les fils et tiges principaux et secondaires de ladite paroi, de deux autres côtés par les plis des avancées des fils ou tiges principaux, et d'un dernier côté par les fils tertiaires. Il est connu de manière alternative de former des cages avec, en lieu et place des fils tertiaires, une barre ou similaire engagée dans lesdites avancées. Cette barre ou similaire est alors parallèle aux fils secondaires.

Une telle clôture permet de délimiter simplement un espace tel qu'une parcelle de terrain. Cependant, les écartements entre les fils ou tiges forment des jours, ce qui permet de voir au travers d'une telle clôture dite nue.

Afin de pallier à cet inconvénient, il est connu de tresser des lanières ou lattes minces et souples servant d'éléments d'occultation sur les fils ou tiges de grilles ou grillages de la clôture. Préférentiellement, ces lanières sont tressées dans le sens des fils principaux, autour des fils secondaires.

Ces lanières sont de manière connue obtenues par extrusion.

Les lanières permettent alors d'occulter les jours de la clôture nue. On forme ainsi une clôture occultante ou brise-vue. Ces lanières peuvent être maintenues sur la clôture nue à leurs extrémités par des clips d'extrémité sur les grilles ou grillages.

Alternativement ou de manière complémentaire, ces lanières peuvent être maintenues par des clips complémentaires sur les grilles ou grillages à d'autres endroits le long des lanières, et les moyens de maintien peuvent comporter des pliages ou des découpes formant des renvois d'accroche sur les fils ou tiges.

Ces lanières ont l'avantage d'être réalisées simplement par extrusion à peu de frais. Elles sont faciles et compactes à stocker et à transporter. En effet, ces lanières peuvent être vendues sous la forme d'un rouleau par exemple de soixante mètres, que l'utilisateur découpe en lanières correspondant aux dimensions des grilles ou grillages de la clôture nue à recouvrir. Le rouleau peut être contenu dans un blister en forme de disque facile à empiler.

Selon un autre mode de stockage ou conditionnement connu, ces lanières peuvent être découpées à une longueur définie, par exemple un mètre, et rangées par paquets de lames par lots dans un carton adapté, d'une longueur de un mètre et vingt centimètres de long par exemple. Alternativement, on peut plier des lattes de un à plus de deux mètres en « C » et les placer imbriquées en tête bêche, dans des cartons de taille correspondante. On obtient ainsi un stockage ou conditionnement de dimensions sensiblement compactes facilitant le stockage et la manutention.

Cette solution de lanières souple et mince présente des inconvénients. Bien que ludique, l'opération de tressage de ces lanières sur une grille ou un grillage prend du temps. De plus, la largeur des lanières doit être adaptée à un espacement entre les fils ou tiges principaux appelé aussi maille. Une lanière de latte trop faible ne permet pas d'assurer une occultation satisfaisante. Une largeur de lanière trop grande ne permet pas d'insérer la lanière dans l'espacement entre les fils ou tiges principaux. En outre, en cas de fort vent, les lanières souples se déforment et peuvent se désengager de la matrice.

Il est connu pour remédier à ce dernier inconvénient de pincer le haut et le bas des lanières tressées contre les grilles ou grillages avec des barrettes à encliqueter. Mais là aussi, cela amène un inconvénient de fabriquer et proposer ces barrettes pour un maintien satisfaisant. Cela augmente le temps de posage ainsi que le nombre d'éléments à prévoir pour le montage, et donc le coût de revient d'une clôture occultante.

Il est connu également, pour réaliser une clôture occultante, d'utiliser des éléments d'occultation rigides tels que des plaques ou des poteaux de bois. Ces éléments d'occultation rigides sont insérés dans les cages de la clôture.

Ils peuvent être maintenus dans les cages par les fils tertiaires des avancées ou par une barre ou similaire engagée dans chaque avancée formant un élément de maintien perpendiculaire aux éléments d'occultation rigides dans les cages.

Egalement, cette barre ou similaire peut être conjuguée aux fils tertiaires, formant alors un élément de maintien supplémentaire.

Cet élément de maintien perpendiculaire ou supplémentaire peut être une barre en bois ou un profil en Té, voire un profil dit en cornière à deux ailes, ou un tube fendu sur toute sa longueur.

Les éléments d'occultation rigides peuvent être maintenus en position par des moyens de liaison les reliant à cet élément de maintien perpendiculaire ou complémentaire. Les éléments d'occultation rigides sont ainsi immobilisés par rapport à la grille ou grillage. On peut ainsi utiliser comme moyens de liaison des clous ou des vis.

Le rendu esthétique d'une clôture occultante comportant de tels éléments d'occultation rigides est alors plus qualitatif et la tenue mécanique également. Le montage est plus rapide que par tressage. Il suffit d'insérer des éléments d'occultation rigides dans les cages selon la direction des fils ou tiges principaux, et des éléments de maintien complémentaires dans les avancées transverses selon la direction des fils ou tiges secondaires.

Cependant, les éléments d'occultation rigides sont plus longs et coûteux à fabriquer que les lattes souples. Leur conditionnement, transport et leur stockage sont plus problématiques également du fait de leur rigidité les empêchant d'être pliés, de leur taille, et de leur poids.

Les éléments de maintien complémentaires sont eux aussi rigides et peu déformables et sont de ce fait encombrants à stocker et à emballer.

De plus, il faut là aussi prévoir une largeur d'élément d'occultation rigide spécifique aux espacements des fils ou tiges principaux du grillage ou grille, ce qui augmente le nombre de références à fabriquer. Enfin, il faut que les poteaux soient suffisamment longs pour s'adapter à toute hauteur de grillage, ce qui implique de les découper à la bonne taille pour le montage de la clôture occultante. On génère alors un rebut conséquent. Alternativement, dans le cas de longueurs adaptées aux hauteurs de clôtures, on augmente le nombre de références à conditionner et à stocker. EP 2 924 193 A1, FR 3 032 217 A1, EP 3 249 139 A1 et FR 3 033 351 A1 montrent des éléments d'occultation selon l'état de la technique antérieur.

La présente invention se veut de remédier aux inconvénients de l'état de la technique cités précédemment.

Un objectif de l'invention est de proposer un élément d'occultation dont la fabrication peut être réalisée à peu de frais.

Un autre objectif de l'invention est de proposer un élément d'occultation qui soit léger et qui présente une tenue mécanique et une rigidité plus importantes que les lattes souples flexibles. Cet élément d'occultation doit pouvoir s'adapter à plusieurs espacements ou mailles de fils principaux de grille ou grillage de clôture, voire à différents types de clôtures. Cet élément d'occultation doit pouvoir également être conditionné simplement dans un emballage facile à manutentionner, à stocker et à manipuler, que ce soit sur un lieu de vente ou dans un entrepôt. Cet élément d'occultation doit de plus permettre de réduire les éléments accessoires à prévoir pour leur montage.

Un objectif de l'invention est également de proposer un montage simple, rapide, pratique et ludique d'une clôture occultante, ne nécessitant que peu d'éléments autres que les éléments d'occultation pour son montage. On simplifie ainsi la gestion des éléments accessoires aux éléments d'occultation (tels que des éléments de maintien complémentaires, clips d'extrémité, clips complémentaires, barrettes, etc...)

Enfin, un objectif de l'invention est de proposer une clôture occultante robuste, qui présente un rendu qualitatif et qui ne comporte que peu d'éléments accessoires aux éléments d'occultation.

A cet effet, l'invention concerne un élément d'occultation, conçu apte à coopérer avec une paroi notamment verticale de type grille ou grillage s'étendant entre deux poteaux, constituée d'une part de fils ou tiges principaux, maintenus solidairement parallèles et régulièrement espacés au moyen de fils ou tiges secondaires de ladite paroi, et où lesdits fils ou tiges principaux présentent, au moins à chacune de leurs extrémités haute et basse, un pli formant avec les plis des autres fils ou tiges principaux, une avancée perpendiculaire à ces derniers, faisant saillie du plan de ladite paroi et destinée à la rigidification de cette dernière. L'élément d'occultation se présente sous la forme d'une pièce linéaire rigide disposée entre deux fils ou tiges principaux, maintenue d'un côté par les fils ou tiges secondaires et de l'autre par une barre ou similaire engagée dans ladite avancée.

Avantageusement, l'élément d'occultation consiste en une plaque rectangulaire faite d'un premier matériau thermoplastique, comprenant longitudinalement au moins une zone faite d'un second matériau thermoplastique plus souple que le premier, en sorte de constituer une ligne de pliage autorisant la mise en volume de ladite plaque, et ainsi la rigidification dudit élément d'occultation.

L'invention concerne également un élément d'occultation, conçu apte à coopérer avec une paroi notamment verticale de type grille ou grillage s'étendant entre deux poteaux, constituée d'une part de fils ou tiges principaux, maintenus solidairement parallèles et régulièrement espacés au moyen de fils ou tiges secondaires de ladite paroi, et où lesdits fils ou tiges principaux présentent, au moins à chacune de leurs extrémités haute et basse, un pli formant avec les plis des autres fils ou tiges principaux, une avancée perpendiculaire à ces derniers, faisant saillie du plan de ladite paroi et destinée à la rigidification de cette dernière, lesdits plis supportant au moins un fil ou tige tertiaire parallèle aux fils ou tiges secondaires, tandis que ledit élément d'occultation se présente sous la forme d'une pièce linéaire rigide disposée entre deux fils ou tiges principaux, maintenue d'un côté par les fils ou tiges secondaires et de l'autre par les fils ou tiges tertiaires.

Avantageusement encore, l'élément d'occultation consiste en une plaque rectangulaire faite d'un premier matériau thermoplastique, comprenant longitudinalement au moins une zone faite d'un second matériau thermoplastique plus souple que le premier, en sorte de constituer une ligne de pliage autorisant la mise en volume de ladite plaque, et ainsi la rigidification dudit élément.

Cela permet d'avoir un élément d'occultation qui est souple et flexible pour faciliter le rangement, le stockage et le conditionnement. Cet élément d'occultation peut, une fois plié et mis en volume, devenir un élément d'occultation rigide. Cet élément d'occultation peut s'adapter à différents types de clôtures, présentant soit des fils ou tiges tertiaires, soit une barre ou similaire engagée dans les avancées. Il peut s'adapter à des clôtures présentant des espacements de fils principaux différents.

Par la présence de plusieurs lignes de pliage, cet élément d'occultation peut s'adapter à différentes largeurs de mailles de clôture. Cet élément d'occultation peut également être utilisé sur des clôtures avec ou sans fils ou tiges tertiaires.

Selon une caractéristique additionnelle, le premier matériau thermoplastique présente un module d'Young compris entre deux mille et quatre mille Méga pascals.

Selon une autre caractéristique additionnelle, le second matériau thermoplastique est plus souple que le premier matériau thermoplastique.

Avantageusement, le second matériau thermoplastique présente une dureté shore A inférieure ou égale à 80.

Selon encore une autre caractéristique additionnelle, l'élément d'occultation présente une section transversale fermée.

Cela permet d'avoir un élément d'occultation plus rigide et d'améliorer le ressenti qualitatif du produit en le faisant ressembler à un tube rigide, sans présenter les inconvénients de transport, stockage et rangement de ces tubes rigides.

L'invention concerne aussi un procédé de fabrication d'un élément d'occultation. Ce procédé consiste à réaliser successivement les étapes suivantes :
- on procède à une première extrusion à travers une première partie d'une tête d'extrusion d'un premier matériau thermoplastique en une plaque rectangulaire comportant une section transversale d'extrusion,
- on intercale en au moins un point d'arrivée d'extrusion le long de la section transversale d'extrusion de la plaque rectangulaire un second matériau thermoplastique différent et compatible chimiquement avec le premier matériau thermoplastique à travers une seconde partie de la tête d'extrusion, pour dissocier longitudinalement la plaque rectangulaire en au moins une zone en second matériau thermoplastique intercalée entre deux zones en premier matériau thermoplastique,
- on refroidit et on coupe à une longueur définie la plaque rectangulaire ainsi extrudée comportant au moins longitudinalement une zone en un second matériau thermoplastique conjointe à deux zones en un premier matériau thermoplastique.

Cela permet de fabriquer à peu de frais un élément d'occultation souple et flexible comportant des zones en deux matériaux thermoplastique différents conjointes longitudinalement.

L'invention concerne également un premier procédé d'occultation d'une clôture comportant une paroi notamment verticale de type grille ou grillage s'étendant entre deux poteaux, ladite paroi étant constituée d'une part de fils ou tiges principaux, maintenus solidairement parallèles et régulièrement espacés au moyen de fils ou tiges secondaires de ladite paroi, et où lesdits fils ou tiges principaux présentent, au moins à chacune de leurs extrémités haute et basse, un pli formant avec les plis des autres fils ou tiges principaux, une avancée perpendiculaire à ces derniers, faisant saillie du plan de ladite paroi et destinée à la rigidification de cette dernière, lesdits plis supportant chacun au moins un fil ou tige tertiaire parallèle aux fils ou tiges secondaires.

Ce premier procédé comporte les étapes suivantes :
- on sélectionne un élément d'occultation adapté aux dimensions de la clôture à occulter dans le sens des fils ou tiges principaux, ledit élément d'occultation se présentant sous la forme d'une plaque rectangulaire faite d'un premier matériau thermoplastique, comprenant longitudinalement au moins une zone faite d'un second matériau thermoplastique plus souple que le premier, en sorte de constituer une ligne de pliage autorisant la mise en volume de ladite plaque rectangulaire, et ainsi la rigidification dudit élément d'occultation,
- on plie selon la ou les ligne(s) de pliage longitudinale(s) la plaque pour mettre en volume l'élément d'occultation,
- on insère entre deux fils ou tiges principaux l'élément d'occultation ainsi mis en volume dans une cage dans un sens des fils ou tiges principaux, définie d'un côté par la paroi, de deux autres côtés d'autre part par les plis au moins haut et bas des fils ou tiges principaux, et d'un dernier côté par les fils tertiaires.

L'invention concerne de plus un second procédé d'occultation d'une clôture comportant une paroi notamment verticale de type grille ou grillage s'étendant entre deux poteaux, ladite paroi étant constituée d'une part de fils ou tiges principaux, maintenus solidairement parallèles et régulièrement espacés au moyen de fils ou tiges secondaires de ladite paroi, et où lesdits fils ou tiges principaux présentent, au moins à chacune de leurs extrémités haute et basse, un pli formant avec les plis des autres fils ou tiges principaux, une avancée perpendiculaire à ces derniers, faisant saillie du plan de ladite paroi et destinée à la rigidification de cette dernière.

Ce second procédé comporte les étapes suivantes :
- on sélectionne au moins deux éléments d'occultation adaptés aux dimensions de la clôture à occulter dans le sens des fils ou tiges principaux, lesdits éléments d'occultation se présentant sous la forme de plaques rectangulaires faites d'un premier matériau thermoplastique, comprenant longitudinalement au moins une zone faite d'un second matériau thermoplastique plus souple que le premier, en sorte de constituer une ligne de pliage autorisant la mise en volume desdites plaques rectangulaires, et ainsi la rigidification desdits éléments d'occultation,
- on plie selon la ou les ligne (s) de pliage longitudinale(s) les plaques pour mettre en volume les éléments d'occultation,
- on insère entre deux fils ou tiges principaux les éléments d'occultation ainsi mis en volume dans deux cages dans le sens des fils ou tiges principaux, définies chacune d'un côté par la paroi, de deux autres côtés par les plis au moins haut et bas des fils ou tiges principaux, et d'un dernier côté par une barre ou similaire engagée dans l'avancée formée par les plis.

Selon une alternative de mise en œuvre de ce second procédé d'occultation d'une clôture, il comporte les étapes supplémentaires suivantes :
- on sélectionne et on découpe une longueur de la plaque rectangulaire ou d'un élément d'occultation,
- on plie selon la ou les ligne (s) de pliage longitudinale(s) la longueur de la plaque rectangulaire ou de l'élément d'occultation pour la mettre en volume et former ainsi une barre ou similaire,
- on insère dans une des avancées formées par les plis la longueur ainsi pliée.

Pour finir, l'invention concerne une clôture d'occultation obtenue par la mise en œuvre du premier procédé d'occultation d'une clôture ou du second procédé d'occultation d'une clôture, avec ou sans les étapes supplémentaires.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue d'une partie d'une clôture nue de l'art antérieur comportant une paroi verticale constituée de fils ou tiges principaux et de fils ou tiges secondaires, les fils principaux présentant des plis saillants du plan de la paroi qui supportent des fils ou tiges tertiaires de la clôture,
- la figure 2 est une vue d'une partie d'une clôture occultante selon l'art antérieur, comportant une clôture nue similaire à celle de la figure 1 et comportant également des éléments d'occultation rigides,
- la figure 3 est une vue d'une partie d'une clôture occultante selon l'invention, comportant une clôture nue similaire à celle de la figure 1 et comportant également des éléments d'occultation selon l'invention,
- la figure 4 est une vue selon un autre angle de la clôture de la figure 3,
- les figures 5a, 5b présentent une section transversale d'un élément d'occultation à plat et une fois plié, selon un premier mode de réalisation de l'invention,
- les figures 6a, 6b présentent une section transversale d'un élément d'occultation à plat et une fois plié, selon un second mode de réalisation de l'invention,
- les figures 7a, 7b présentent une section transversale d'un élément d'occultation à plat et une fois plié, selon un troisième mode de réalisation de l'invention,
- les figures 8a, 8b présentent une section transversale d'un élément d'occultation en position de stockage et en position d'insertion dans une clôture nue, selon un quatrième mode de réalisation de l'invention.

La présente invention concerne de manière essentielle un élément d'occultation 1, conçu apte à coopérer avec une clôture 2 qui peut être nue. Plus spécifiquement, cet élément d'occultation 1 est conçu apte à coopérer avec une paroi 20 notamment verticale de type grille ou grillage. Cette clôture 2 comporte les éléments décrits dans la description de l'art antérieur, à savoir la paroi 20 constituée d'une part de fils ou tiges principaux 21, maintenus solidairement parallèles et régulièrement espacés au moyen de fils ou tiges secondaires 22 de ladite paroi 20, et où lesdits fils ou tiges principaux 21 présentent, au moins à chacune de leurs extrémités haute et basse, un pli 23 formant avec les plis 23 des autres fils ou tiges principaux 21, une avancée 24 perpendiculaire à ces derniers, faisant saillie du plan de ladite paroi 20 et destinée à la rigidification de cette dernière. Cette clôture 2 peut également comporter des fils ou tiges tertiaires 25 maintenus solidairement aux plis 23 des avancées 24. Cette clôture 2 comporte au moins une cage 26 dans un sens des fils ou tiges principaux 21. Cette/ces cage(s) 26 peut/peuvent présenter une/des section(s) rectangulaire(s) ou présenter la forme d'un parallélogramme. Chaque cage 26 est définie d'un côté par la paroi 20, de deux autres côtés d'autre part par les plis 23 au moins haut et bas des fils ou tiges principaux 21, et d'un dernier côté par les fils ou tiges tertiaires 25. Le dernier côté de cette/ces cage(s) peut être défini alternativement par une barre ou similaire « B » engagée dans chaque avancée 24.

L'élément d'occultation 1 se présente sous la forme d'une plaque rectangulaire 3, formant une latte selon un sens longitudinal et présentant une section transversale « S ».

La plaque rectangulaire 3 peut présenter une épaisseur comprise entre 1,2 et 1,6 millimètres.

Cette plaque rectangulaire 3 est faite d'un premier matériau thermoplastique 30. Cette plaque est dissociée en au moins deux zones 4, 4' en premier matériau thermoplastique dans le sens longitudinal de la plaque rectangulaire 3. Est intercalé entre ces deux zones 4, 4' une autre zone 5 longitudinale, constituée d'un second matériau thermoplastique 50 plus souple que le premier matériau thermoplastique 30.

Cette autre zone 5 longitudinale en second matériau thermoplastique 50 constitue une ligne de pliage autorisant la mise en volume de la plaque rectangulaire 3.

Un pliage et une mise en volume de la plaque rectangulaire 3 permet ainsi la rigidification dudit élément d'occultation 1 pour former une pièce linéaire rigide.

L'élément d'occultation 1 ainsi mis en volume présente des caractéristiques de résistance à la déformation améliorées dans un sens transversal. La latte ainsi pliée peut s'insérer dans des cages d'une clôture nue pour remplacer avantageusement les poteaux en bois.

Avantageusement, le premier matériau thermoplastique 30 est rigide. Par le terme rigide, on désigne un matériau thermoplastique présentant un module d'Young compris entre deux mille et quatre mille Méga pascals.

Avantageusement, le second matériau thermoplastique 50 est plus souple que le premier matériau thermoplastique 30. Par le terme souple, on désigne un matériau thermoplastique présentant un module d'Young inférieur à mille cinq cent Méga pascals, préférentiellement inférieur à mille Méga pascal.

Par le terme souple, on désigne également un matériau thermoplastique présentant une dureté Shore A inférieure à 80, préférentiellement 75.

Cette dureté shore A est mesurée en accord avec notamment les normes ISO 868 et 7619, ASTM D 2240 et DIN 53505.

Avantageusement, le premier matériau thermoplastique 30 est un Polychlorure de Vinyle, chargé ou non, et le second matériau thermoplastique 50 est un Polychlorure de Vinyle souple.

Mais alternativement, le premier matériau thermoplastique 30 est un Polypropylène, chargé ou non, et le second matériau thermoplastique 50 est un élastomère thermoplastique du type par exemple Styrène-Ethylène Butylène-Styrène plus connu sous son acronyme SEBS.

En tout état de cause, le premier matériau thermoplastique 30 et le second matériau thermoplastique 50 sont compatibles chimiquement. Ils présentent des caractéristiques mécaniques différentes.

Avantageusement, le premier matériau thermoplastique 30 et le second matériau thermoplastique 50 sont colorés dans la masse notamment par des mélanges-maîtres ou des pigments, mais ils peuvent également être transparents, notamment le second matériau thermoplastique 50. Les deux matériaux thermoplastiques 30, 50 peuvent être de couleurs différentes. Cela permet d'obtenir un effet esthétique supplémentaire sur l'élément d'occultation 1.

L'élément d'occultation 1 peut présenter des zones 4, 4' en premier matériau thermoplastique 30 présentant une section transversale « S » plane. Mais les sections « S » de ces zones 4, 4' peuvent être crénelées, ondulées, présenter des décrochés ou avancées ou tout autre profil continu. Une section crénelée peut présenter un avantage esthétique ou mécanique en améliorant la rigidité de la plaque rectangulaire 3 dans son sens transversal.

Un tel élément d'occultation 1 est obtenu par extrusion.

Plus spécifiquement, on procède, pour la fabrication d'un tel élément d'occultation 1, à une première extrusion à travers une première partie d'une tête d'extrusion d'un premier matériau thermoplastique 30 en une plaque rectangulaire 3 comportant une section transversale d'extrusion « S ».

On intercale ensuite en au moins un point d'arrivée d'extrusion le long de la section transversale d'extrusion « S » de la plaque rectangulaire 3 un second matériau thermoplastique 50. Ce second matériau thermoplastique 50 est différent du premier matériau thermoplastique 30 mais il est compatible chimiquement avec ce premier matériau thermoplastique 30.

Cette étape d'intercaler le second matériau thermoplastique 50 se fait à travers une seconde partie de la tête d'extrusion suivant la première partie de la tête d'extrusion.

On dissocie ainsi longitudinalement la plaque rectangulaire 3 en au moins une zone 5 en second matériau thermoplastique 50 intercalée entre deux zones 4, 4' en premier matériau thermoplastique 30.

Ensuite, on refroidit et on coupe à une longueur définie la plaque rectangulaire 3 ainsi extrudée. La coupe peut se faire perpendiculairement, mais peut également présenter une autre forme telle qu'une découpe pour former des chevrons ou des vagues.

Cette plaque rectangulaire 3 comporte au moins longitudinalement une zone 5 en second matériau thermoplastique 50 intercalée entre deux zones 4, 4' en premier matériau thermoplastique 30.

On peut réaliser une plaque rectangulaire 3 en forme d'un ruban souple d'une dizaine de mètres, voire de soixante mètres de longueur. Cette plaque rectangulaire 3 peut être roulée pour faciliter son stockage ou son rangement. Ce rouleau peut ensuite être découpé à des longueurs désirées pour former des éléments d'occultation 1.

On peut de manière alternative aussi découper directement la plaque rectangulaire 3 en éléments d'occultation 1, d'une longueur par exemple de 1 mètre ou de 2 mètres. On peut alors facilement ranger par paquets les éléments d'occultation 1 par lots dans un carton de 1.20 mètres de long. Alternativement, on peut plier les éléments d'occultation 1 d'une longueur de 1 à plus de 2 mètres en « C » et les placer en tête bêche, dans des cartons de taille adaptée.

Un élément d'occultation 1 selon l'invention coopère avec la clôture 2, et plus spécifiquement avec la paroi 20 notamment verticale et les cages 26 qu'elle comporte de la manière suivante :
- on sélectionne un élément d'occultation 1 d'une longueur adaptée aux dimensions de la clôture 2 que l'on cherche à occulter. Pour se faire, on peut découper un rouleau de plaque rectangulaire 3 à la longueur souhaitée. On peut alternativement utiliser un élément d'occultation 1 déjà découpé à une longueur satisfaisante. On peut alternativement aussi découper un élément d'occultation 1 trop long par rapport à la clôture 2 que l'on cherche à occulter,
- on met en volume l'élément d'occultation 1 en le pliant selon les zones souples 5 longitudinales,
- on insère dans une cage 26 de la clôture 2 l'élément d'occultation 1 mis en volume, ladite cage 26 étant définie d'un côté par la paroi 20 notamment verticale, de deux autres côtés par les plis 23 des fils ou tiges principaux 21. Concernant le dernier côté, il peut être défini soit par des fils ou tiges tertiaires 25, soit par une barre « B » ou similaire engagée dans chaque avancée 24.

On peut réitérer ces étapes pour occulter une largeur voulue de la clôture 2.

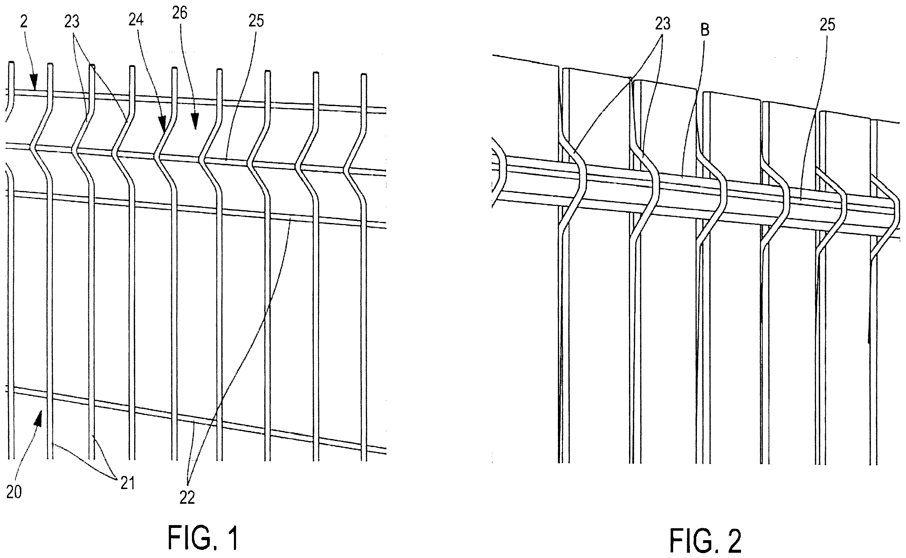

Dans le cas d'une barre « B » ou similaire, on monte avantageusement deux éléments d'occultation 1 sur la clôture 2, cela pour permettre un maintien satisfaisant de la barre « B » ou similaire dans l'avancée 24 correspondante. La barre « B » ou similaire peut être une barre rigide comme illustré sur la figure 2, mais cela peut être un tube fendu destiné à coopérer avec des fils tertiaires 25 en fond de plis. Selon une autre alternative, la barre « B » ou similaire peut être formée d'une portion de la plaque rectangulaire 3 ou d'un élément d'occultation 1 découpé et plié. Cette dernière solution présente l'avantage d'éviter ainsi de produire des éléments supplémentaires rigides difficiles à stocker et à ranger.

On obtient ainsi, en mettant en œuvre ce procédé, finalement une clôture occultante à peu de frais et rapide à monter. Cette clôture présente un rendu qualitatif d'une clôture occultante comportant des poteaux tel qu'illustré à la figure 2.

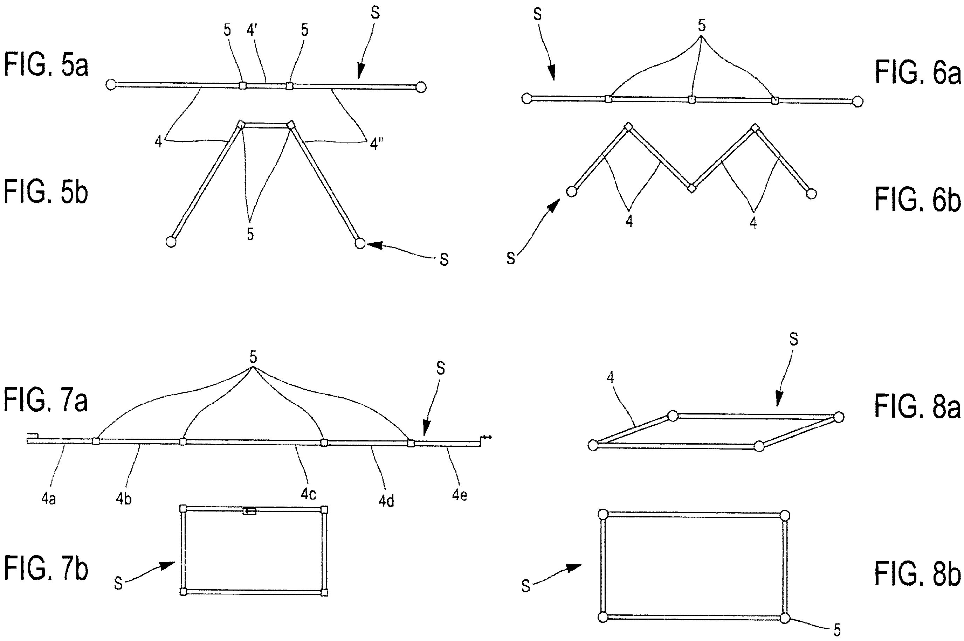

Un élément d'occultation 1 selon l'invention peut présenter différentes sections transversales « S » illustrées par les figures 5a à 8b. Les figures 5a, 6a, 7a, 8a présentent ces sections transversales « S » telles qu'obtenues par extrusion. Les figures 5b, 6b, 7b, 8b présentent les sections respectivement des figures 5a, 6a, 7a, 8a mises en volume après pliage.

Selon une première alternative illustrée par les figures 5a et 5b, la section transversale « S » de la plaque rectangulaire 3 et donc de l'élément d'occultation 1 correspondant présente deux zones 5 en second matériau thermoplastique 50 intercalées entre trois zones 4, 4', 4" en premier matériau thermoplastique 30. Cette forme permet de réaliser simplement une zone plate centrale qui vient naturellement en appui sur les fils principaux 21 du grillage ou grille constituant une face de la cage 26. Les zones latérales 4, 4" en premier matériau thermoplastique 30 forment des ailes qui s'appuient contre les autres faces internes de la cage 26 de cette clôture 2.

Selon une seconde alternative, illustrée par les figures 6a et 6b, la section transversale « S » de la plaque rectangulaire 3 et donc de l'élément d'occultation 1 correspondant présente trois zones 5 en second matériau thermoplastique 50 intercalées entre quatre zones 4 en premier matériau thermoplastique 30.

L'adaptabilité de l'élément d'occultation 1 apportée par les zones souples 5 longitudinales en second matériau thermoplastique 50 lui permet de s'adapter à différents espacements ou mailles de fils principaux 21 d'une grille ou grillage. Par exemple un élément d'occultation 1 de 75 mm de largeur selon la première ou seconde alternative permet d'être monté sur un grillage à fils rigides d'espacement ou mailles de 50 millimètres ou 55 millimètres. Cet élément d'occultation 1 permet donc de réduire simplement le nombre de références à fabriquer.

Selon une troisième alternative, illustrée par les figures 7a et 7b, la section transversale « S » de la plaque rectangulaire 3 et donc de l'élément d'occultation 1 correspondant présente quatre zones 5 en second matériau thermoplastique 50 intercalées entre cinq zones 4a, 4b, 4c, 4d, 4e en premier matériau thermoplastique 30. Les zones 4a, 4e en premier matériau thermoplastique 30 des extrémités comportent chacune des moyens de verrouillage destinés à coopérer ensemble. Ces moyens de verrouillage peuvent être réalisés par des clips et contre-clips qui s'étendent longitudinalement le long de la plaque rectangulaire 3. On peut ainsi former simplement un poteau rectangulaire à partir d'une plaque rectangulaire 3 plate.

Selon une quatrième alternative, illustrée par les figures 7a et 7b, la section transversale « S » de la plaque rectangulaire 3 et donc de l'élément d'occultation 1 correspondant présente quatre zones 5 en second matériau thermoplastique 50 intercalées entre quatre zones 4 en premier matériau thermoplastique 30. La section transversale « S » de la plaque rectangulaire 3 est alors fermée pour former un losange aplati en sortie d'extrusion.

Dans cette configuration, la flexibilité de l'élément d'occultation 1 ainsi obtenu une fois extrudé est plus réduite, mais elle suffit toutefois pour réaliser un rangement par paquets des éléments d'occultation 1 par lots dans un carton adapté, ou bien alternativement, on peut plier les éléments d'occultation 1 de 1 à plus de 2 mètres de longueur en « C » et les placer en tête bêche, dans des cartons de taille adaptée.

Avantageusement, on peut prévoir des moyens complémentaires de maintien d'un ou de plusieurs éléments d'occultation 1 dans la clôture 2. Ces moyens complémentaires de maintien peuvent se présenter sous la forme d'une lice basse en forme de U (non illustrée ici) à placer en bas des éléments d'occultation 1 notamment par encliquetage pour les empêcher de glisser au sol.

Avantageusement, du fait des tenues mécaniques et de la rigidité plus importante que dans le cas de lattes souples, on peut prévoir que les éléments d'occultation 1 mis en volume dépassent du haut de la grille ou grillage sur lequel ils sont montés. La partie dépassante des éléments d'occultation 1 du fait de leur mise en volume reste en position. On peut ainsi réaliser une clôture occultante plus haute que la clôture 2.

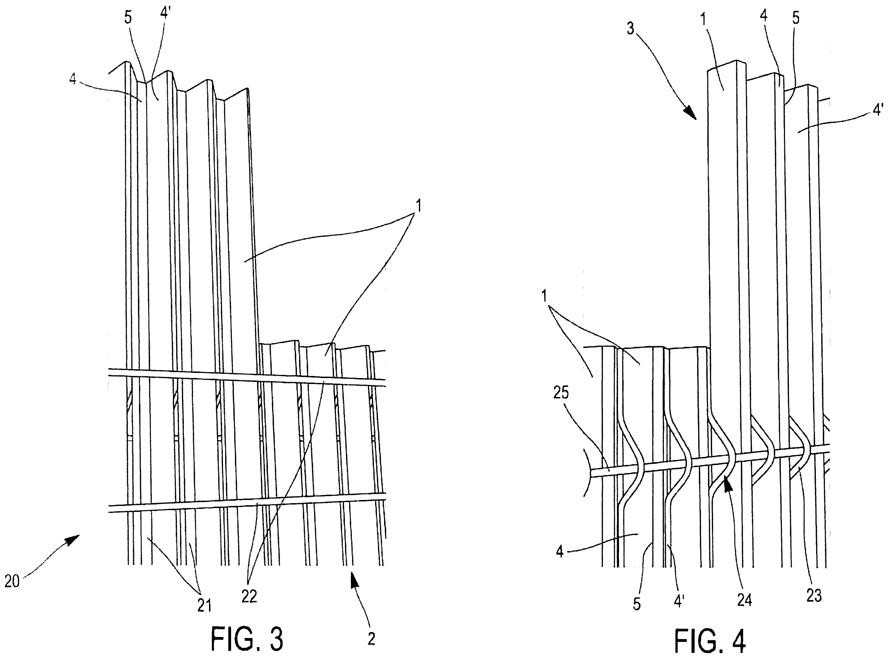

Les figures 3 et 4 présentent une clôture occultante ainsi obtenue selon deux angles de vue opposés. La clôture occultante comporte une largeur sur laquelle les éléments d'occultation 1 mis en volume sont sensiblement d'une longueur identique à la hauteur de la grille ou grillage, et une largeur portion sur laquelle les éléments d'occultation 1 dépassent de la grille ou grillage.

Cette invention permet de garder une simplicité de production de plaques rectangulaires 3 plates et flexibles, à laquelle on apporte une différenciation par des zones longitudinales de couleurs différentes. Une fonctionnalisation de certaines de ces zones longitudinales pour former des zones préférentielles de pliage permet de mettre en volume un élément d'occultation 1.

On combine ainsi tous les avantages des lattes flexibles et des poteaux sans conserver leurs inconvénients spécifiques.

De plus cette plaque rectangulaire 3 peut être découpée et pliée en une barre « B » ou similaire pouvant s'engager dans les avancées 24 de la clôture 2, pour fermer les cages 26 dans lesquelles les éléments d'occultation 1 peuvent être insérés. On simplifie ainsi la production.

Les modes de rangement, stockage et présentation de vente sont conservés voire améliorés.

Une plaque rectangulaire 3 pouvant être découpée en élément d'occultation 1 ou un élément d'occultation 1 selon l'invention permet de conserver les moyens de rangement des lattes souples de l'art antérieur.

Un tel élément d'occultation 1 ou plaque rectangulaire 3 pouvant être découpée en élément d'occultation 1 permet une réduction des volumes de transport et de stockage, une réduction de place dans les linéaires des enseignes de bricolage, comparativement aux solutions pour les poteaux rigides.

L'emballage nécessaire est alors réduit par rapport à celui nécessaire pour des éléments d'occultation rigides tels que des poteaux. A l'avantage économique s'ajoute la réduction de l'impact environnemental lié à des emballages plus réduits.

## Revendications

1. Elément d'occultation (1), conçu apte à coopérer avec une paroi (20) notamment verticale de type grille ou grillage s'étendant entre deux poteaux, constituée d'une part de fils ou tiges principaux (21), maintenus solidairement parallèles et régulièrement espacés au moyen de fils ou tiges secondaires (22) de ladite paroi (20), et où lesdits fils ou tiges principaux (21) présentent, au moins à chacune de leurs extrémités haute et basse, un pli (23) formant avec les plis (23) des autres fils ou tiges principaux (21), une avancée (24) perpendiculaire à ces derniers, faisant saillie du plan de ladite paroi (20) et destinée à la rigidification de cette dernière, tandis que ledit élément d'occultation (1) se présente sous la forme d'une pièce linéaire rigide disposée entre deux fils ou tiges principaux (21), maintenue d'un côté par les fils ou tiges secondaires (22) et de l'autre par une barre (B) ou similaire engagée dans ladite avancée (24), **caractérisé en ce qu'**il consiste en une plaque rectangulaire (3) faite d'un premier matériau thermoplastique (30), comprenant longitudinalement au moins une zone (5) faite d'un second matériau thermoplastique (50) plus souple que le premier, en sorte de constituer une ligne de pliage autorisant la mise en volume de ladite plaque (3), et ainsi la rigidification dudit élément d'occultation (1).

2. Elément d'occultation (1), conçu apte à coopérer avec une paroi (20) notamment verticale de type grille ou grillage s'étendant entre deux poteaux, constituée d'une part de fils ou tiges principaux (21), maintenus solidairement parallèles et régulièrement espacés au moyen de fils ou tiges secondaires (22) de ladite paroi (20), et où lesdits fils ou tiges principaux (21) présentent, au moins à chacune de leurs extrémités haute et basse, un pli (23) formant avec les plis (23) des autres fils ou tiges principaux (21), une avancée (24) perpendiculaire à ces derniers, faisant saillie du plan de ladite paroi (20) et destinée à la rigidification de cette dernière, lesdits plis (23) supportant au moins un fil ou tige tertiaire (25) parallèle aux fils ou tiges secondaires (22), tandis que ledit élément d'occultation (1) se présente sous la forme d'une pièce linéaire rigide disposée entre deux fils ou tiges principaux (21), maintenue d'un côté par les fils ou tiges secondaires (22) et de l'autre par les fils ou tiges tertiaires (25), **caractérisé en ce qu'**il consiste en une plaque rectangulaire (3) faite d'un premier matériau thermoplastique (30), comprenant longitudinalement au moins une zone (5) faite d'un second matériau thermoplastique (50) plus souple que le premier, en sorte de constituer une ligne de pliage autorisant la mise en volume de ladite plaque (3), et ainsi la rigidification dudit élément d'occultation (1).

3. Élément d'occultation (1) selon la revendication 1 ou 2 **caractérisé par le fait que** le premier matériau thermoplastique (30) présente un module d'Young compris entre deux mille et quatre mille Méga pascals.

4. Élément d'occultation (1) selon l'une des revendications 1 à 3, **caractérisé par le fait que** le second matériau thermoplastique (50) est plus souple que le premier matériau thermoplastique (30) et **par le fait qu'**il présente une dureté shore A inférieure ou égale à 80.

5. Élément d'occultation (1) selon l'une des revendications 1 à 3, **caractérisé par le fait que** l'élément d'occultation (1) présente une section transversale (S) fermée.

6. Procédé de fabrication d'un élément d'occultation (1) selon l'une quelconque des revendications 1 à 5, **caractérisé en ce qu'**il consiste à réaliser successivement les étapes suivantes :
- on procède à une première extrusion à travers une première partie d'une tête d'extrusion d'un premier matériau thermoplastique (30) en une plaque rectangulaire (3) comportant une section transversale d'extrusion (S),
- on intercale en au moins un point d'arrivée d'extrusion le long de la section transversale d'extrusion (S) de la plaque rectangulaire (3) un second matériau thermoplastique (50) différent et compatible chimiquement avec le premier matériau thermoplastique (30) à travers une seconde partie de la tête d'extrusion, pour dissocier longitudinalement la plaque rectangulaire (3) en au moins une zone (5) en second matériau thermoplastique (50) intercalée entre deux zones (4, 4') en premier matériau thermoplastique(30),
- on refroidit et on coupe à une longueur définie la plaque rectangulaire (3) ainsi extrudée comportant au moins longitudinalement une zone (5) en un second matériau thermoplastique (50) conjointe à deux zones (4, 4') en un premier matériau thermoplastique (30).

7. Procédé d'occultation d'une clôture (2) comportant une paroi (20) notamment verticale de type grille ou grillage s'étendant entre deux poteaux, ladite paroi (20) étant constituée d'une part de fils ou tiges principaux (21), maintenus solidairement parallèles et régulièrement espacés au moyen de fils ou tiges secondaires (22) de ladite paroi (20), et où lesdits fils ou tiges principaux (21) présentent, au moins à chacune de leurs extrémités haute et basse, un pli (23) formant avec les plis (23) des autres fils ou tiges principaux (21), une avancée (24) perpendiculaire à ces derniers, faisant saillie du plan de ladite paroi (20) et destinée à la rigidification de cette dernière, lesdits plis (23) supportant chacun au moins un fil ou tige tertiaire (25) parallèle aux fils ou tiges secondaires (22), **caractérisé par le fait que** ledit procédé comporte les étapes suivantes :
- on sélectionne un élément d'occultation (1) adapté aux dimensions de la clôture (2) à occulter dans le sens des fils ou tiges principaux (21), ledit élément d'occultation (1) se présentant sous la forme d'une plaque rectangulaire (3) faite d'un premier matériau thermoplastique (30), comprenant longitudinalement au moins une zone (5) faite d'un second matériau thermoplastique (50) plus souple que le premier, en sorte de constituer une ligne de pliage autorisant la mise en volume de ladite plaque rectangulaire (3), et ainsi la rigidification dudit élément d'occultation (1),
- on plie selon la ou les ligne(s) de pliage longitudinale(s) la plaque rectangulaire (3) pour mettre en volume l'élément d'occultation (1),
- on insère entre deux fils ou tiges principaux (21) l'élément d'occultation (1) ainsi mis en volume dans une cage (26) dans un sens des fils ou tiges principaux (21), définie d'un côté par la paroi (20), de deux autres côtés par les plis (23) au moins haut et bas des fils ou tiges principaux (21), et d'un dernier côté par les fils tertiaires (25).

8. Procédé d'occultation d'une clôture (2) comportant une paroi (20) notamment verticale de type grille ou grillage s'étendant entre deux poteaux, ladite paroi (20) étant constituée d'une part de fils ou tiges principaux (21), maintenus solidairement parallèles et régulièrement espacés au moyen de fils ou tiges secondaires (22) de ladite paroi (20), et où lesdits fils ou tiges principaux (21) présentent, au moins à chacune de leurs extrémités haute et basse, un pli (23) formant avec les plis (23) des autres fils ou tiges principaux (21), une avancée (24) perpendiculaire à ces derniers, faisant saillie du plan de ladite paroi (20) et destinée à la rigidification de cette dernière, **caractérisé par le fait que** ledit procédé comporte les étapes suivantes :
- on sélectionne au moins deux éléments d'occultation (1) adaptés aux dimensions de la clôture (2) à occulter dans le sens des fils ou tiges principaux (21), lesdits éléments d'occultation (1) se présentant sous la forme de plaques rectangulaires (3) faites d'un premier matériau thermoplastique (30), comprenant longitudinalement au moins une zone (5) faite d'un second matériau thermoplastique (50) plus souple que le premier, en sorte de constituer une ligne de pliage autorisant la mise en volume desdites plaques (3), et ainsi la rigidification desdits éléments d'occultation (1),
- on plie selon la ou les ligne (s) de pliage longitudinale(s) les plaques rectangulaires (3) pour mettre en volume les éléments d'occultation (1),
- on insère entre deux fils ou tiges principaux (21) les éléments d'occultation (1) ainsi mis en volume dans deux cages (26) dans un sens des fils ou tiges principaux (21), définies chacune d'un côté par la paroi (20), de deux autres côtés par les plis (23) au moins haut et bas des fils ou tiges principaux (21), et d'un dernier côté par une barre (B) ou similaire engagée dans l'avancée (24) formée par les plis (23).

9. Procédé d'occultation d'une clôture (2) selon la revendication 8, **caractérisé par le fait qu'**il comporte les étapes suivantes :
- on sélectionne et on découpe une longueur de la plaque rectangulaire (3) ou d'un élément d'occultation (1),
- on plie selon la ou les ligne(s) de pliage longitudinale(s) la longueur de la plaque rectangulaire (3) ou de l'élément d'occultation (1) pour la mettre en volume et former ainsi une barre (B) ou similaire,
- on insère dans une des avancées (24) formées par les plis (23) la longueur ainsi pliée.

10. Clôture d'occultation comprenant un élément d'occultation selon l'une des revendications 1 à 5 et obtenue par la mise en œuvre du procédé de l'une des revendications 7 à 9.

## Patentansprüche

1. Verdeckungselement (1), geeignet ausgestaltet, um mit einer Wand (20), nämlich einer vertikalen Wand der Art Gitter oder Masche, zusammenzuwirken, die sich zwischen zwei Pfosten erstreckt und einerseits aus Hauptdrähten oder -stangen (21) besteht, die durch Sekundärdrähte oder -stangen (22) der besagten Wand (20) fest mit und parallel zu und regelmäßig von einander beabstandet gehalten werden, und wobei die besagten Hauptdrähte oder -stangen (21) zumindest an jedem ihrer oberen und unteren Enden eine Falte (23) aufweisen, die mit den Falten (23) der anderen Hauptdrähte oder -stangen (21) einen zu diesen letzteren senkrechten Vorsprung (24) bilden, der aus der Ebene der besagten Wand (20) herausragt und zur Versteifung der letzteren bestimmt ist, während das besagte Verdeckungselement (1) die Form eines starren linearen Teils hat, das zwischen zwei Hauptdrähten oder -stangen (21) angeordnet ist und auf der einen Seite durch die Sekundärdrähte oder -stangen (22) und auf der anderen Seite durch eine Stange (B) oder dergleichen gehalten wird, die in dem besagten Vorsprung (24) eingeführt ist, **dadurch gekennzeichnet, dass** es aus einer rechteckigen Platte besteht (3), die aus einem ersten thermoplastischen Material (30) hergestellt ist und in Längsrichtung mindestens einen Bereich (5) umfasst, der aus einem zweiten thermoplastischen Material (50) hergestellt ist, das flexibler als das erste ist, sodass eine Faltlinie gebildet wird, die es erlaubt, der besagten Platte (3) Volumen zu verleihen und also das besagte Verdeckungselement (1) zu versteifen.

2. Verdeckungselement (1), das geeignet ausgestaltet ist, um mit einer Wand (20), nämlich einer vertikalen Wand der Art Gitter oder Masche, zusammenzuwirken, die sich zwischen zwei Pfosten erstreckt und einerseits aus Hauptdrähten oder -stangen (21) besteht, die durch Sekundärdrähte oder -stangen (22) der besagten Wand (20) fest mit und parallel zu und regelmäßig von einander beabstandet gehalten werden, und wobei die besagten Hauptdrähte oder -stangen (21) zumindest an jedem ihrer oberen und unteren Enden eine Falte (23) aufweisen, die mit den Falten (23) der anderen Hauptdrähte oder -stangen (21) einen zu diesen letzteren senkrechten Vorsprung (24) bilden, der aus der Ebene der besagten Wand (20) herausragt und zur Versteifung der letzteren bestimmt ist, wobei die besagten Falten (23) mindestens einen Tertiärdraht oder eine Tertiärstange (25) parallel zu den Sekundärdrähten oder -stangen abstützen (22), während das besagte Verdeckungselement (1) die Form eines starren linearen Teils hat, das zwischen zwei Hauptdrähten oder -stangen (21) angeordnet ist und auf der einen Seite durch die Sekundärdrähte oder -stangen (22) und auf der anderen Seite durch die Tertiärdrähte oder -stangen (25) gehalten wird, **dadurch gekennzeichnet, dass** es aus einer rechteckigen Platte besteht (3), die aus einem ersten thermoplastischen Material (30) hergestellt ist und in Längsrichtung mindestens einen Bereich (5) umfasst, der aus einem zweiten thermoplastischen Material (50) hergestellt ist, das flexibler als das erste ist, sodass eine Faltlinie gebildet wird, die es erlaubt, der besagten Platte (3) Volumen zu verleihen und also das besagte Verdeckungselement (1) zu versteifen.

3. Verdeckungselement (1) nach Anspruch 1 oder 2, **dadurch gekennzeichnet, dass** das erste thermoplastische Material (30) ein Elastizitätsmodul zwischen zweitausend und viertausend Megapascal aufweist.

4. Verdeckungselement (1) nach einem der Ansprüche 1 bis 3, **dadurch gekennzeichnet, dass** das zweite thermoplastische Material (50) flexibler ist als das erste thermoplastische Material (30) und dass es eine Shore A-Härte von weniger als oder gleich 80 aufweist.

5. Verdeckungselement (1) nach einem der Ansprüche 1 bis 3, **dadurch gekennzeichnet, dass** das Verdeckungselement (1) einen geschlossenen Querschnitt (S) aufweist.

6. Verfahren zur Herstellung eines Verdeckungselements (1) nach irgendeinem der Ansprüche 1 bis 5, **dadurch gekennzeichnet, dass** es darin besteht, folgende Schritte nacheinander auszuführen:
- durch einen ersten Teil eines Extrusionskopfes wird eine erste Extrusion eines ersten thermoplastischen Materials (30) in einer rechteckigen Platte (3) vorgenommen, die einen Extrusionsquerschnitt (S) umfasst,
- an mindestens einem Extrusionsendpunkt wird durch einen zweiten Teil des Extrusionskopfes entlang des Extrusionsquerschnitts (S) der rechteckigen Platte (3) ein zweites thermoplastisches Material (50) eingefügt, das von dem ersten thermoplastischen Material (30) unterschiedlich und mit letzterem chemisch kompatibel ist, um die rechteckige Platte (3) in Längsrichtung in mindestens einen Bereich (5) aus einem zweiten thermoplastischen Material (50) zu teilen, der zwischen zwei Bereichen (4, 4') aus einem ersten thermoplastischen Material (30) eingefügt ist,
- die also extrudierte rechteckige Platte (3), die mindestens in Längsrichtung einen Bereich (5) aus einem zweiten thermoplastischen Material (50) umfasst, der mit zwei Bereichen (4, 4') aus einem ersten thermoplastischen Material (30) gemeinsam ist, wird abgekühlt und auf eine definierte Länge geschnitten.

7. Verfahren zum Verdecken eines Zauns (2), der eine Wand (20), nämlich eine vertikale Wand der Art Gitter oder Masche, umfasst, die sich zwischen zwei Pfosten erstreckt, wobei die besagte Wand (20) einerseits aus Hauptdrähten oder -stangen (21) besteht, die durch Sekundärdrähte oder -stangen (22) der besagten Wand (20) fest mit und parallel zu und regelmäßig von einander beabstandet gehalten werden, und wobei die besagten Hauptdrähte oder -stangen (21) zumindest an jedem ihrer oberen und unteren Enden eine Falte (23) aufweisen, die mit den Falten (23) der anderen Hauptdrähte oder -stangen (21) einen zu diesen letzteren senkrechten Vorsprung (24) bilden, der aus der Ebene der besagten Wand (20) herausragt und zur Versteifung der letzteren bestimmt ist, wobei die besagten Falten (23) jeweils mindestens einen Tertiärdraht oder eine Tertiärstange (25) parallel zu den Sekundärdrähten oder -stangen (22) abstützen, **dadurch gekennzeichnet, dass** das besagte Verfahren folgende Schritte umfasst:
- es wird ein an den Abmessungen des zu verdeckenden Zauns (2) in der Richtung der Hauptdrähte oder -stangen (21) angepasstes Verdeckungselements (1) ausgewählt, wobei das besagte Verdeckungselement (1) als eine aus einem ersten thermoplastischen Material (30) hergestellte rechteckige Platte (3) ausgestaltet ist, die in Längsrichtung mindestens einen Bereich (5) aus einem zweiten thermoplastischen Material (50) umfasst, das flexibler als das erste ist, sodass eine Faltlinie gebildet wird, die es erlaubt, der besagten rechteckigen Platte (3) Volumen zu verleihen und also das besagte Verdeckelement (1) zu versteifen,
- die rechteckige Platte (3) wird entlang der Längsfaltlinie bzw. -linien gefaltet, um dem Verdeckungselement (1) Volumen zu verleihen,
- zwischen zwei Hauptdrähten oder -stangen (21) wird das also mit Volumen verleihte Verdeckungselement (1) in einem Käfig (26) in der Richtung der Hauptdrähte oder -stangen (21) eingefügt, der auf einer Seite durch die Wand (20), auf zwei anderen Seiten durch die mindestens oberen und unteren Falten (23) der Hauptdrähte oder -stangen (21), und auf der letzten Seite durch die Tertiärdrähte (25) definiert ist.

8. Verfahren zum Verdecken eines Zauns (2), der eine Wand (20), nämlich eine vertikale Wand der Art Gitter oder Masche, umfasst, die sich zwischen zwei Pfosten erstreckt, wobei die besagte Wand (20) einerseits aus Hauptdrähten oder -stangen (21) besteht, die durch Sekundärdrähte oder -stangen (22) der besagten Wand (20) fest mit und parallel zu und regelmäßig von einander beabstandet gehalten werden, und wobei die Hauptdrähte oder -stangen (21) zumindest an jedem ihrer oberen und unteren Enden eine Falte (23) aufweisen, die mit den Falten (23) der anderen Hauptdrähte oder -stangen (21) einen Vorsprung (24) senkrecht zu den letzteren bildet, der aus der Ebene der besagten Wand (20) herausragt und zur Versteifung der letzteren bestimmt ist, **dadurch gekennzeichnet, dass** das Verfahren folgende Schritte umfasst:
- es werden mindestens zwei an den Abmessungen des zu verdeckenden Zauns (2) in der Richtung der Hauptdrähte oder -stangen (21) angepasste Verdeckungselemente (1) ausgewählt, wobei die besagten Verdeckungselemente (1) als aus einem ersten thermoplastischen Material (30) gefertigten rechteckigen Platten (3) ausgestaltet sind, die in Längsrichtung mindestens einen Bereich (5) aus einem zweiten thermoplastischen Material (50) umfassen, das flexibler als das erste ist, sodass eine Faltlinie gebildet wird, die es erlaubt, den besagten Platten (3) Volumen zu verleihen und also die besagten Verdeckelemente (1) zu versteifen,
- die rechteckigen Platten (3) werden entlang der Längsfaltlinie bzw. -linien gefaltet, um den Verdeckungselementen (1) Volumen zu verleihen,
- zwischen zwei Hauptdrähten oder -stangen (21) werden die also mit Volumen verleihten Verdeckungselemente (1) in zwei Käfigen (26) in der Richtung der Hauptdrähte oder -stangen (21) eingefügt, die jeweils auf einer Seite durch die Wand (20), auf zwei anderen Seiten durch die mindestens oberen und unteren Falten (23) der Hauptdrähte oder -stangen (21), und auf einer letzten Seite durch einen in dem durch die Falten (23) gebildeten Vorsprung (24) eingeführten Stab (B) oder dergleichen definiert sind.

9. Verfahren zum Verdecken eines Zauns (2) nach Anspruch 8, **dadurch gekennzeichnet, dass** es folgende Schritte umfasst:
- eine Länge der rechteckigen Platte (3) oder eines Verdeckungselements (1) wird gewählt und ausgeschnitten,
- die Länge der rechteckigen Platte (3) oder des Verdeckungselements (1) wird entlang der Längsfaltlinie oder -linien gefaltet, um ihr Volumen zu verleihen und also einen Stab (B) oder dergleichen zu bilden,
- in einen der durch die Falten (23) gebildeten Vorsprünge (24) wird die also gefaltete Länge eingeführt.

10. Verdeckungszaun, umfassend ein Verdeckungselement nach einem der Ansprüche 1 bis 5 und erhalten durch die Implementierung des Verfahrens nach einem der Ansprüche 7 bis 9.

## Claims

1. Concealment element (1), designed capable of cooperating with a wall (20), namely a vertical wall, such as a grid or mesh extending between two posts, formed, on the one hand, of main wires or rods (21), held integrally parallel and regularly spaced apart by means of secondary wires or rods (22) of said wall (20), and wherein said main wires or rods (21) have, at least at each of their upper and lower ends, a fold (23) forming, with the folds (23) of the other main wires or rods (21), a projection (24) perpendicular to the latter, projecting out of the plane of said wall (20) and aimed at stiffening the latter, while said concealment element (1) is in the form of a rigid linear part arranged between two main wires or rods (21), held, on one side, by the secondary wires or rods (22) and, on the other side, by a bar (B) or the like inserted in said projection (24), wherein it is formed of a rectangular plate (3) made out of a first thermoplastic material (30), comprising longitudinally at least one area (5) made out of a second thermoplastic material (50), which is more flexible than the first one, so as to form a folding line permitting to provide said plate (3) with a volume, and thus to rigidify said concealment element (1).

2. Concealment element (1), designed capable of cooperating with a wall (20), namely a vertical wall, such as a grid or mesh extending between two posts, formed, on the one hand, of main wires or rods (21), held integrally parallel and regularly spaced apart by means of secondary wires or rods (22) of said wall (20), and wherein said main wires or rods (21) have, at least at each of their upper and lower ends, a fold (23) forming, with the folds (23) of the other main wires or rods (21), a projection (24) perpendicular to the latter, projecting out of the plane of said wall (20) and aimed at stiffening the latter, said folds (23) supporting at least one tertiary wire or rod (25) parallel to the secondary wires or rods (22), while said concealment element (1) is in the form of a rigid linear part arranged between two main wires or rods (21), held, on one side, by the secondary wires or rods (22) and, on the other side, by the tertiary wires or rods (25), wherein it is formed of a rectangular plate (3) made out of a first thermoplastic material (30), comprising longitudinally at least one area (5) made out of a second thermoplastic material (50), which is more flexible than the first one, so as to form a folding line permitting to provide said plate (3) with a volume, and thus to rigidify said concealment element (1).

3. Concealment element (1) according to claim 1 or 2, wherein the first thermoplastic material (30) has a Young modulus between two thousand and four thousand mega-pascals.

4. Concealment element (1) according to one of claims 1 to 3, wherein the second thermoplastic material (50) is more flexible than the first thermoplastic material (30) and it has a shore A hardness lower than or equal to 80.

5. Concealment element (1) according to one of claims 1 to 3, wherein the concealment element (1) has a closed cross-section (S).

6. Method for manufacturing a concealment element (1) according to any one of claims 1 to 5, wherein it consists in successively carrying out the following steps:
- a first extrusion through a first portion of an extrusion head of a first thermoplastic material (30) is proceeded to in a rectangular plate (3) including an extrusion cross-section (S),
- at least at one extrusion end point along the extrusion cross-section (S) of the rectangular plate (3) is interposed a second thermoplastic material (50), which is different from and chemically compatible with the first thermoplastic material (30), through a second portion of the extrusion head, in order to longitudinally dissociate the rectangular plate (3) in at least one area (5) made out of the second thermoplastic material (50) interposed between two areas (4, 4') made out of the first thermoplastic material (30),
- the so extruded rectangular plate (3) comprising at least longitudinally one area (5) made out of a second thermoplastic material (50) joined to two areas (4, 4') made out of a first thermoplastic material (30) is cooled down and cut to a defined length.

7. Method for concealing a fence (2) including a wall (20), namely a vertical wall, such as a grid or mesh extending between two posts, said wall (20) being formed, on the one hand, of main wires or rods (21), held integrally parallel and regularly spaced apart by means of secondary wires or rods (22) of said wall (20), and wherein said main wires or rods (21) have, at least at each of their upper and lower ends, a fold (23) forming, with the folds (23) of the other main wires or rods (21), a projection (24) perpendicular to the latter, projecting out of the plane of said wall (20) and aimed at rigidifying the latter, said folds (23) each supporting at least one tertiary wire or rod (25) parallel to the secondary wires or rods (22), wherein said method includes the following steps:
- a concealment element (1) adapted to the dimensions of the fence (2) to be concealed in the direction of the main wires or rods (21) is selected, said concealment element (1) being in the form of a rectangular plate (3) made out of a first thermoplastic material (30), comprising longitudinally at least one area (5) made out of a second thermoplastic material (50), which is more flexible than the first one, so as to form a folding line permitting to provide said rectangular plate (3) with a volume, and thus to rigidify said concealing element (1),
- the rectangular plate (3) is folded along the longitudinal folding line or lines in order to provide the concealment element (1) with a volume,
- between two main wires or rods (21) is inserted the concealing element (1), which is thus provided with a volume in a cage (26) in a direction of the main wires or rods (21), defined on one side by the wall (20), on two other sides by the at least top and bottom folds (23) of the main wires or rods (21), and on a last side by the tertiary wires (25).

8. Method for concealing a fence (2) including a wall (20), namely a vertical wall, such as a grid or mesh extending between two posts, said wall (20) being formed, on the one hand, of main wires or rods (21), held integrally parallel and regularly spaced apart by means of secondary wires or rods (22) of said wall (20), and wherein said main wires or rods (21) have, at least at each of their upper and lower ends, a fold (23) forming, with the folds (23) of the other main wires or rods (21), a projection (24) perpendicular to the latter, projecting out of the plane of said wall (20) and aimed at rigidifying the latter, wherein said method includes the following steps:
- at least two concealment elements (1) adapted to the dimensions of the fence (2) to be concealed in the direction of the main wires or rods (21) are selected, said concealment elements (1) being in the form of rectangular plates (3) made out of a first thermoplastic material (30), comprising longitudinally at least one area (5) made out of a second thermoplastic material (50), which is more flexible than the first one, so as to form a folding line permitting to provide said plates (3) with a volume, and thus to rigidify said concealment elements (1),
- the rectangular plates (3) are folded along the longitudinal folding line or lines in order to provide the element (1) with a volume,
- between two main wires or rods (21) are inserted the concealment elements (1), which is thus provided with a volume in two cages (26) in a direction of the main wires or rods (21), each defined on one side by the wall (20), on two other sides by the at least top and bottom folds (23) of the main wires or rods (21), and on a last side by a bar (B) or the like inserted into the projection (24) formed by the folds (23).

9. Method for concealing a fence (2) according to claim 8, wherein it includes the following steps:
- a length of the rectangular plate (3) or of a concealment element (1) is selected and cut,
- the length of the rectangular plate (3) or of the concealment element (1) is folded along the longitudinal folding line or lines in order to provide same with a volume and to thus form a bar (B) or the like,
- the length so folded is inserted into one of the projections (24) formed by the folds (23).

10. Concealment fence comprising a concealment element according to one of claims 1 to 5 and obtained by implementing the method according to one of claims 7 to 9.
